# FASCICULE DE BREVET EUROPEEN

(11) **EP 0 660 431 B1**
(45) Date de publication et mention de la délivrance du brevet: **22.10.1997**
(21) Numéro de dépôt: 94402957.8
(22) Date de dépôt: 20.12.1994
(51) Int. Cl.: H01M 2/36, H01M 6/10

(54) **Générateur électrochimique à électrolyte liquide et électrodes enroulées en spirale à remplissage en électrolyte amélioré**
Elektrochemischer Generator mit flüssigen Elektrolyten und spiralförmige gewickelten Elektroden und mit verbesserter Elektrolytfüllung
Electrochemical generator with liquid electrolyte and spairlly wound electrodes and ameliorated electrolyte filling

(30) Priorité: 23.12.1993 FR 9315558
(43) Date de publication de la demande: 28.06.1995
(73) Titulaire: ALCATEL ALSTHOM COMPAGNIE GENERALE D'ELECTRICITE, 75008 Paris (FR)
(72) Inventeur: Freluche, Jean-Pierre, F-16000 Angouleme (FR); Pierson, Marc, F-33300 Bordeaux (FR)
(74) Mandataire: Bourely, Paul

(56) Documents cités:
- PATENT ABSTRACTS OF JAPAN vol. 6 no. 77 (E-106) ,14 Mai 1982 & JP-A-57 015368 (SHIN KOBE ELECTRIC MACH CO) 26 Janvier 1982,
- PATENT ABSTRACTS OF JAPAN vol. 6 no. 136 (E-120) [1014] ,23 Juillet 1982 & JP-A-57 060674 (SHIN KOBE ELECTRIC MACH CO) 12 Avril 1982,
- PATENT ABSTRACTS OF JAPAN vol. 4 no. 189 (E-39) [671] ,25 Décembre 1980 & JP-A-55 131972 (SHINKOUBE DENKI K.K.) 14 Octobre 1980,

## Description

La présente invention concerne un générateur électrochimique à électrolyte liquide et électrodes enroulées en spirale à l'intérieur d'une enceinte cylindrique ou prismatique, avec un conduit axial de remplissage en cet électrolyte.

On sait que ces générateurs présentent lors de leur assemblage des temps d'absorption de l'électrolyte par les électrodes très variables en raison de l'emprisonnement de l'air par l'électrolyte dans le coeur des électrodes. On est conduit pour assurer une absorption complète de l'électrolyte à prolonger le temps de remplissage, mais l'on n'évite souvent pas d'arrêter le remplissage lorsque l'on observe une saturation apparente. Il en résulte des pollutions des connexions et du cordon d'étanchéité, provoquant une carbonatation au niveau de la fermeture de l'élément, et des pollutions externes si un excès d'électrolyte non absorbé vient à déborder de l'enceinte du générateur. Par ailleurs, si de l'électrolyte frais vient tomber sur de l'électrolyte non absorbé, il en résulte des éclaboussures qui viennent polluer le cordon d'étanchéité et la surface externe de l'enceinte.

La présente invention a pour but de procurer un générateur électrochimique dont le remplissage en électrolyte soit facile, complet, et rapide, et n'entraîne pas de pollution du cordon d'étanchéité ou de la surface externe de son enceinte.

L'objet de l'invention est un générateur électrochimique à électrolyte liquide et électrodes enroulées en spirale munie d'une cheminée axiale de remplissage en électrolyte et placées à l'intérieur d'une enveloppe cylindrique ou prismatique de telle sorte qu'il existe entre le pourtour externe de l'ensemble des électrodes et la paroi interne de ladite enveloppe un conduit d'évacuation de l'air refoulé par l'électrolyte, générateur caractérisé en ce qu'il comporte une rondelle disposée entre ladite enveloppe et l'ensemble des électrodes à l'extrémité de ladite cheminée opposée à l'entrée d'électrolyte, ladite rondelle étant munie d'au moins une ouverture mettant en communication ladite cheminée et ledit conduit.

La rondelle selon l'invention permet ainsi de ménager entre la paroi interne de l'enveloppe et les électrodes un espace mettant en communication la cheminée axiale et le conduit où peuvent alors circuler l'électrolyte et/ou l'air refoulé.

Cette rondelle est munie de reliefs tournés de préférence vers le fond de l'enveloppe. Ces reliefs peuvent être constitués par des bossages, ceux-ci alternant avec des trous.

Ils peuvent aussi être constitués par des nervures rectilignes le long de cordes symétriques par rapport à un axe de symétrie de la rondelle, entre lesquelles sont disposés des trous.

La rondelle peut aussi comporter une ouverture unique en forme d'encoche allant de son pourtour à son centre.

La rondelle peut encore être de dimension transversale inférieure à la dimension transversale interne de l'enveloppe et munie sur son pourtour d'au moins deux languettes de largeur telle qu'elles s'appliquent sur le pourtour interne de l'enveloppe, facilitant ainsi son maintien en place dans le fond de l'enveloppe.

Il est décrit ci-après, à titre d'exemple et en référence aux figures schématiques du dessin annexé, un générateur électrochimique cylindrique selon l'invention.

La figure 1 représente le générateur en coupe axiale au cours de son remplissage en électrolyte.

La figure 2 représente en plan une rondelle facilitant le passage de l'électrolyte au fond du générateur du centre à son pourtour et le refoulement de l'air par la périphérie du générateur.

La figure 3 représente en plan une rondelle comportant une répartition différente des bossages et des trous.

La figure 4 représente en plan et la figure 5 en coupe diamétrale selon l'axe V-V de la figure 4 une rondelle à deux nervures rectilignes de part et d'autre de rangées de trous.

La figure 6 représente en plan et la figure 7 en coupe diamétrale selon l'axe VII-VII de la figure 6 une rondelle analogue à celle de la figure 4, mais comportant sur son pourtour quatre languettes facilitant son maintien en place sur le fond de l'enveloppe.

La figure 8 représente en plan et la figure 9 en coupe diamétrale selon l'axe IX-IX de la figure 8 une rondelle ne comportant pas de bossage ni de nervure, mais percée d'une encoche allant de son pourtour à son centre.

La figure 10 représente en plan et la figure 11 en coupe diamétrale selon l'axe XI-XI de la figure 10 une rondelle analogue à celle de la figure 6, mais de plus faible diamètre et comportant sur son pourtour trois languettes facilitant son maintien en place sur le fond de l'enveloppe.

La figure 12 représente en plan une rondelle de forme générale carrée, dont les diagonales sont égales au diamètre interne de l'enveloppe pour faciliter son maintien en place dans le fond de cette enveloppe.

La figure 13 représente en plan une rondelle comportant une répartition différente des bossages et des trous de telle sorte que les trous périphériques soient des trous séquents.

La figure 14 représente en plan et la figure 15 en coupe diamétrale selon l'axe XV-XV de la figure 14 une rondelle comportant une encoche arrondie à sa périphérie.

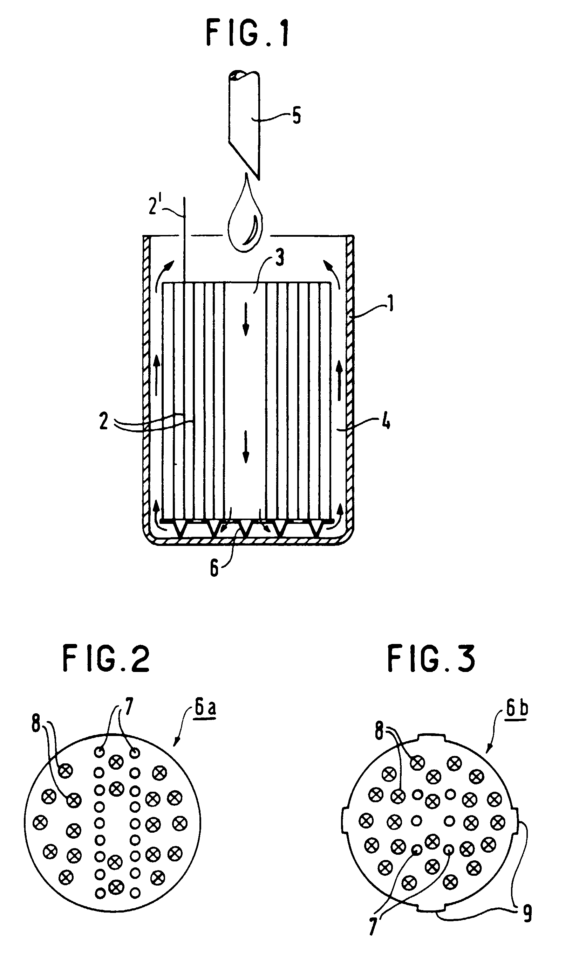

Dans la figure 1, le générateur électrochimique selon la présente invention comprend, à l'intérieur d'une enveloppe cylindrique 1, des électrodes 2 munies d'une connexion 2' et enroulées en spirale autour d'une cheminée axiale 3 utilisée pour le remplissage en électrolyte.

Le pourtour externe de l'ensemble des électrodes spiralées n'est pas rigoureusement cylindrique de sorte qu'il subsiste un conduit 4 pour l'évacuation de l'air déplacé par l'électrolyte. En effet, lors du spiralage des électrodes, on observe à l'extérieur du bobineau obtenu une surépaisseur constituée par l'extrémité des électrodes enroulées. Introduit dans une enveloppe parfaitement cylindrique, l'ensemble des électrodes laisse à l'endroit de cette surépaisseur sur toute la hauteur du bobineau un conduit permettant la remontée de l'air. De plus, à cause de la rigidité des électrodes, l'enroulement de celles-ci présente de multiples facettes ménageant des vides entre les spires du bobineau par où l'électrolyte ou l'air peuvent circuler.

L'électrolyte est introduit par l'extrémité d'un tube 5 dans la cheminée axiale 3 où il s'écoule vers le bas, comme représenté par les flèches. Il parvient dans le fond de l'enveloppe au-dessus de la rondelle 6 munie de nervures sur sa face inférieure et percée de trous. Il se répand dans les électrodes ainsi qu'au-dessous de la rondelle 6, tout en chassant l'air, qui s'évacue à l'extérieur par le conduit 4.

La rondelle 6a peut comporter, comme représenté en figures 2 et 3, des trous 7 et des bossages 8, ces derniers sont représentés schématiquement par un cercle entourant une croix. La rondelle 6b peut être de diamètre inférieur au diamètre interne de l'enveloppe sur tout son pourtour et comporter des languettes 9 venant s'appliquer contre le diamètre interne de l'enveloppe et la maintenant à l'encontre d'un déplacement qui la décentrerait (fig.3). Le nombre de trous percés dans la rondelle peut être important vis-à-vis du nombre de bossages (fig.2) ou notablement moins élevé (fig.3).

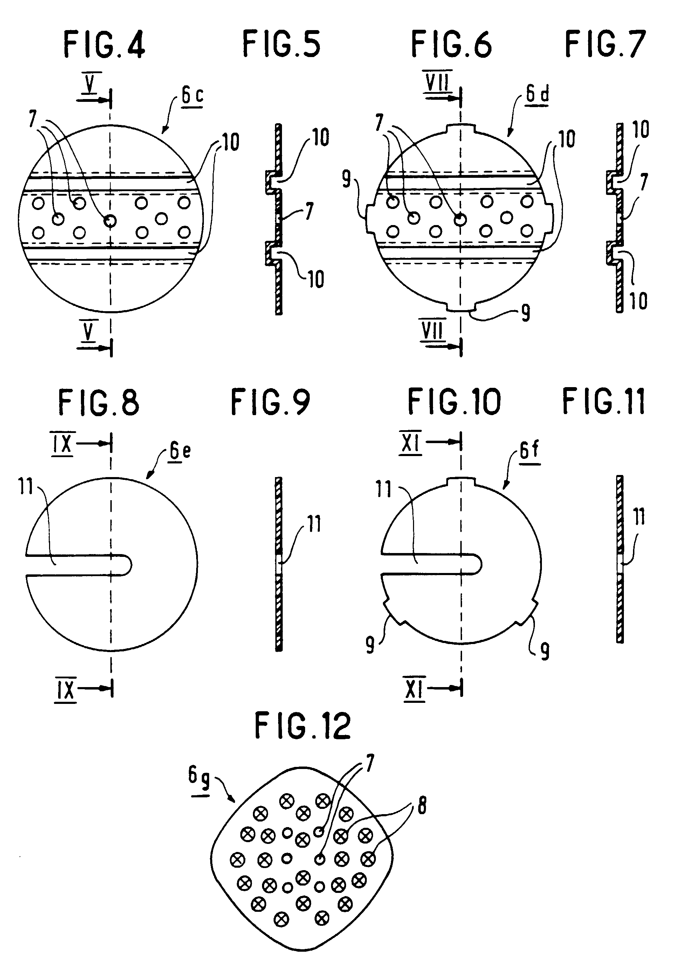

La rondelle 6c représentée en figures 4 et 5 comporte sur sa face inférieure deux nervures rectilignes 10, en forme de cordes de sa surface circulaire, symétriques par rapport à un plan diamétral, entre lesquelles sont percés des trous 7. La rondelle 6d représentée en figures 6 et 7 est analogue à celle des figures 4 et 5 mais de diamètre inférieur, elle comporte quatre languettes disposées aux extrémités des diamètres perpendiculaires. Ces languettes sont destinées à s'appliquer contre la paroi interne de l'enveloppe et à assurer le calage de la rondelle en position centrée sur le fond de l'enveloppe.

La rondelle des figures 8 et 9 est plane et dépourvue de bossages ou de nervures, mais elle comporte une encoche radiale 11 qui s'étend de son centre à son pourtour. L'ouverture de l'encoche sur la périphérie de la rondelle 6e est placée de préférence à l'endroit du conduit 4, mais elle peut tout aussi bien se trouver en n'importe quel points du pourtour du bobineau. La rondelle 6f des figures 10 et 11 est analogue à celle des figures 8 et 9, mais elle a un diamètre inférieur et comporte trois languettes disposées à 120° les unes des autres pour assurer son calage sur le fond de l'enveloppe.

La rondelle 6g de la figure 12 est de forme sensiblement carrée à angles arrondis et comporte des trous 7 et des bossages 8. Sa forme permet de la positionner sur le fond de l'enveloppe de manière à éviter tout mouvement radial qui la décentrerait.

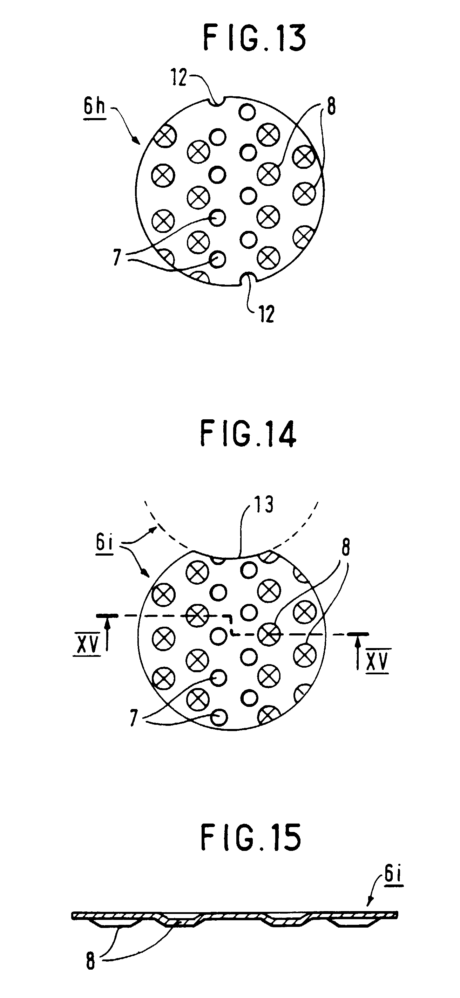

La rondelle 6h de la figure 13 présente sur son pourtour des encoches 12 formées par des trous 7 en partie amputés par la découpe appelés "trous séquents". La rondelle 6h comporte également des bossages 8.

La rondelle 6i des figures 14 et 15 comporte des trous 7 et des bossages 8. Une encoche arrondie 13 est ménagée sur le pourtour de cette rondelle 6i. Cette encoche 13 est commodément obtenue au moment de la découpe par chevauchement de la trace de la découpe précédente d'une rondelle 6i identique.

Des essais de remplissage d'électrolyte effectués sur des générateurs électrochimiques analogues, les uns dépourvus de rondelle selon l'invention et les autres munis de celle-ci, ont montré que le temps de remplissage diminuait de 4 minutes et 17 secondes à 1 minute. On évite ainsi des pollutions du cordon d'étanchéité et de la surface externe de l'enveloppe par débordement, mais également des éclaboussures par l'électrolyte frais venant tomber sur de l'électrolyte précédemment introduit et non absorbé.

On a décrit certains modes de réalisation préférés, mais il doit être bien entendu que de nombreuses modifications et variations sont possibles, à la lumière des enseignements ci-dessus, sans que l'on sorte du cadre de la présente invention.

## Revendications

1. Générateur électrochimique à électrolyte liquide et électrodes enroulées en spirale munie d'une cheminée axiale (3) de remplissage en électrolyte et placées à l'intérieur d'une enveloppe cylindrique ou prismatique de telle sorte qu'il existe entre le pourtour externe de l'ensemble des électrodes et la paroi interne de ladite enveloppe un conduit (4) d'évacuation de l'air refoulé par l'électrolyte, générateur caractérisé en ce qu'il comporte une rondelle (6) disposée entre ladite enveloppe et l'ensemble des électrodes à l'extrémité de ladite cheminée (3) opposée à l'entrée d'électrolyte, ladite rondelle (6) étant munie d'au moins une ouverture (7, 11) mettant en communication ladite cheminée (3) et ledit conduit (4).

2. Générateur selon la revendication 1 dans lequel ladite rondelle est en outre munie de reliefs tournés vers le fond de l'enveloppe.

3. Générateur selon l'une des revendications 1 et 2, dans lequel lesdits reliefs sont formés par des bossages et alternent avec des trous.

4. Générateur selon l'une des revendications 1 et 2, dans lequel lesdits reliefs sont formés par des nervures rectilignes le long de cordes symétriques par rapport à un axe de symétrie de la rondelle, entre lesquelles sont disposés des trous.

5. Générateur selon l'une des revendications précédentes, dans lequel ladite rondelle comporte à sa périphérie des trous séquents.

6. Générateur selon l'une des revendications précédentes, dans lequel ladite rondelle comporte une encoche arrondie sur son poutour.

7. Générateur selon l'une des revendications 1 et 2, dans lequel ladite rondelle est percée d'une ouverture unique en forme d'encoche allant de son pourtour à son centre.

8. Générateur selon l'une des revendications précédentes, dans lequel ladite rondelle est de dimension transversale inférieure à la dimension transversale interne de l'enveloppe et munie sur son pourtour d'au moins deux languettes (9) de largeur telle qu'elles s'appliquent sur la paroi interne de l'enveloppe.

## Patentansprüche

1. Elektrochemischer Generator mit einem flüssigen Elektrolyten und spiralförmig gewickelten Elektroden, die einen axialen Schacht (3) zum Füllen mit Elektrolyt bilden und in einer zylindrischen oder prismatischen Hülle untergebracht sind, derart, daß zwischen dem äußeren Umfang der Einheit von Elektroden und der Innenwand der Hülle ein Kanal zur Abfuhr der vom Elektrolyten verdrängten Luft verbleibt, dadurch gekennzeichnet, daß er eine Scheibe (6) zwischen der Hülle und der Einheit von Elektroden am Ende des Schachts (3) entgegengesetzt zum Elektrolyteinlaß besitzt, wobei diese Scheibe (6) mindestens eine Öffnung (7, 11) aufweist, die den Schacht (3) mit dem Kanal (4) in Verbindung bringt.

2. Generator nach Anspruch 1, bei dem die Scheibe außerdem reliefartige Vorsprünge besitzt, die zum Boden der Hülle zeigen.

3. Generator nach einem der Ansprüche 1 und 2, bei dem die reliefartigen Vorsprünge von Vorsprüngen gebildet werden und mit Löchern abwechseln.

4. Generator nach einem der Ansprüche 1 und 2, bei dem die reliefartigen Vorsprünge von geradlinigen Rippen entlang von symmetrisch bezüglich einer Symmetrieachse der Scheibe verlaufenden Sehnen gebildet werden, zwischen denen Löcher angeordnet sind.

5. Generator nach einem der vorhergehenden Ansprüche, bei dem die Scheibe an ihrer Peripherie angeschnittene Löcher besitzt.

6. Generator nach einem der vorhergehenden Ansprüche, bei dem die Scheibe einen abgerundeten Ausschnitt an ihrem Umfang besitzt.

7. Generator nach einem der Ansprüche 1 und 2, bei dem die Scheibe eine einzige Öffnung in Form eines Einschnitts besitzt, der vom Umfang zum Zentrum der Scheibe verläuft.

8. Generator nach einem der vorhergehenden Ansprüche, bei dem die Scheibe eine kleinere Querabmessung als die innere lichte Weite der Hülle besitzt und an ihrem Umfang mindestens zwei Zungen (9) einer solchen Breite aufweist, daß sich diese an die Innenwand der Hülle anlegen.

## Claims

1. An electrochemical cell having a liquid electrolyte and spiral-wound electrodes provided with an axial chimney (3) for electrolyte filling purposes and placed inside a cylindrical or prismatic enclosure so as to leave a duct (4) between the outside periphery of the spiral-wound electrodes and the inside wall of said enclosure in order to exhaust air displaced by the electrolyte, the cell being characterized in that it includes a washer (6) disposed between said enclosure and the spiral-wound electrodes at the end of said chimney (3) that is furthest from the electrolyte inlet, said washer (6) being provided with at least one opening (7, 11) putting said chimney (3) into communication with said duct (4).

2. A cell according to claim 1, in which said washer is also provided with projections directed towards the end wall of the enclosure.

3. A cell according to claim 1 or 2, in which said projections are formed by bulges that alternate with holes.

4. A cell according to claim 1 or 2, in which said projections are formed by rectilinear ribs extending along chords that are symmetrically disposed about an axis of symmetry of the washer, and between which holes are disposed.

5. A cell according to any preceding claim, in which said washer includes holes that are cut through by its periphery, thereby forming notches.

6. A cell according to any preceding claim, in which said washer includes a broad notch in its periphery.

7. A cell according to claim 1 or 2, in which said washer is pierced by a single opening in the form of a notch extending from its periphery to its center.

8. A cell according to any preceding claim, in which the transverse size of said washer is smaller than the inside transverse size of the enclosure, and the washer is provided on its periphery with at least two tongues (9) of a size enabling them to be bear against the inside wall of the enclosure.
